# EUROPÄISCHE PATENTSCHRIFT

(11) **EP 2 459 971 B1**
(45) Veröffentlichungstag und Bekanntmachung des Hinweises auf die Patenterteilung: **10.08.2016**
(21) Anmeldenummer: 10726050.7
(22) Anmeldetag: 10.06.2010
(51) Int. Cl.: G01D 5/245, G01D 18/00

(54) **VERFAHREN ZUR HERSTELLUNG EINES MAGNETISCHEN SENSORELEMENTS**
METHOD FOR PRODUCTION OF A MAGNETIC SENSOR ELEMENT
PROCÉDÉ POUR FABRIQUER UN ÉLÉMENT CAPTEUR MAGNÉTIQUE

(30) Priorität: 29.07.2009 DE 102009028093
(43) Veröffentlichungstag der Anmeldung: 06.06.2012
(73) Patentinhaber: Robert Bosch GmbH, 70442 Stuttgart (DE)
(72) Erfinder: CALANDRINI, Patrick, 71638 Ludwigsburg (DE); KITZING, Thomas, 07747 Jena (DE); EBERLE, Goetz, 99817 Eisenach (DE); SPOERL, Marcel, 04552 Borna (DE)
(86) Internationale Anmeldenummer: PCT/EP2010/058159
(87) Internationale Veröffentlichungsnummer: WO 2011/012367

(56) Entgegenhaltungen:
- WO-A1-2005/124288
- DE-U1- 20 302 273
- GB-A- 2 034 053
- GB-A- 2 114 755
- GB-A- 2 356 049
- US-A- 5 793 201
- US-A- 5 909 115
- US-A- 5 945 824

## Beschreibung

### Stand der Technik

Die Erfindung betrifft magnetische Sensorelemente, welche beispielsweise als lineare Positions- und/oder Wegsensoren eingesetzt werden können. Insbesondere betrifft die Erfindung eine optimierte Multipolgeometrie für magnetische, lineare Positions- und Wegsensoren. Derartige magnetische Sensorelemente können beispielsweise in der Kraftfahrzeugtechnik eingesetzt werden, insbesondere als lineare Positions- und/oder Wegsensoren in Automatikgetrieben. In verschiedenen Bereichen der Naturwissenschaft und Technik ist die Erkennung einer relativen Lage und/oder Positionierung zwischen zwei beweglich gegeneinander gelagerten Elementen erforderlich. Die Erfindung wird im Folgenden im Wesentlichen beschrieben unter Bezugnahme auf Positionssensoren für die Getriebesteuerung, beispielsweise in Automatikgetrieben, in welchen Stellungen eines Stellgliedes (zum Beispiel einer Wählhebelwelle, eines Wählschiebers oder eines Parksperrenzylinders) relativ zu einem Gehäuse bzw. einem anderen fixierten Element erfasst werden sollen. Derartige Positionssensoren können sowohl einzeln verwendet werden als auch in Elektronikmodulen integriert verbaut werden. Positionssensoren, welche auch im Rahmen der vorliegenden Erfindung erfindungsgemäß modifiziert werden können, sind beispielsweise in Robert Bosch GmbH: "Sensoren im Kraftfahrzeug", Ausgabe 2007, Seiten 136 bis 137 beschrieben. Auch andere Anwendungen sind jedoch grundsätzlich möglich.

Zur Lage- und/oder Positionserkennung werden in vielen Fällen Sensoren eingesetzt, welche nach dem Hall-Prinzip arbeiten. Beispielsweise lassen sich hierfür applikationsspezifische integrierte Schaltkreise (application specific integrated circuits, ASICs) als Magnetsensoren einsetzen, welche neben einem oder mehreren Sensoren, beispielsweise Hall-Sensoren, auch eine Elektronik umfassen können, beispielsweise eine die Signale der Sensoren verarbeitende oder vorverarbeitende Elektronik. Die sensitiven Elemente in den Sensoren bzw. den ASICs werden in der Regel durch einen verschiebbaren, multipolaren Dauermagneten erregt, welcher auch als Geber bezeichnet wird. Durch den Polübergang des Magnetfeldes (Übergang von Nord nach Süd oder Übergang von Süd nach Nord, im Folgenden ohne Beschränkung einer Übergangsrichtung als Nord-Süd-Übergang bezeichnet) wird das Signal in den ASICs generiert. Der Geber wird durch eine Kopplung mit einem Mitnehmer, beispielsweise dem oben genannten Wählhebel bewegt. Die Erfassung der Position des Gebers durch die ASICs ist die Funktion des magnetischen Sensorelements.

Die GB 2 114 755 A zeigt beispielsweise ein magnetisches Sensorelement mit einer Vielzahl von magnetischen Nord-Süd-Übergängen, die entlang einer Magnetbahn angeordnet sind. Beweglich relativ zu der Magnetbahn ist ein Magnetsensor gelagert, durch den die Positionen der Nord-Süd-Übergänge detektiert werden.

Beispielsweise bei einem Automatikgetriebe mit manueller Schaltung, auch M-Schaltung genannt, erfasst der Positionssensor die Stellung des Wählhebels und/oder Wählschiebers, beispielsweise die Stellungen P, R, N, D, S sowie die Zwischenbereiche und gibt diese in Form eines Codes, beispielsweise eines 4-Bit-Codes, an eine Getriebesteuerung aus. Aus Sicherheitsgründen ist die Codierung der Positionsstellung in der Regel einschrittig ausgeführt, d. h. es sind immer zwei Bitwechsel bis zum Erkennen einer neuen Position erforderlich. Der erforderliche magnetische Feldverlauf (Polübergang) wird für die korrekte Signalausgabe vom Geber den sensitiven Elementen zur Verfügung gestellt. Bei einem geometrischen Versatz, beispielsweise durch Positionstoleranzen, hinsichtlich einer vorgegebenen Nominallage, kann es jedoch aufgrund von Verzerrungen der Polübergänge durch die gegenseitige Beeinflussung der magnetischen Pole zu einer Abweichung des gemessenen Positionssignals kommen. Um eine ausreichende Sensorgenauigkeit sicherzustellen, muss die Positionierung des Schiebers in allen drei Raumrichtungen bezüglich der sensitiven Elemente der ASICs eng toleriert werden.

Die Positionstoleranzen zwischen den sensitiven Elementen und dem Geber sind in der Regel eine Folge von Montage- und/oder Bauteiltoleranzen. So umfasst eine Toleranzkette dieser Toleranzen beispielsweise die Positionierung von Hall-Elementen innerhalb eines ASICs, die Positionierung des Hall-ASICs im Sensorpackage, eine Positionierung des Sensorpackages hinsichtlich einer Referenz im Gesamtsystem, die Positionierung des Sensorpackages relativ zum Geber und die Positionierung des Gebers zum Mitnehmer, beispielsweise dem Wählhebel (Messobjekt). Diese Toleranzkette stellt jedoch eine erhebliche Herausforderung an die zu realisierenden Fertigungstoleranzen dar. Die Folge können hohe Ausschussraten und ein hoher wirtschaftlicher Aufwand zur Ausschussreduzierung sein.

### Offenbarung der Erfindung

Es wird daher ein magnetisches Sensorelement vorgeschlagen, welches die Herausforderungen und Nachteile bekannter magnetischer Sensorelemente zumindest weitgehend vermeidet. Ein Grundgedanke der vorliegenden Erfindung liegt in einer geeigneten Auslegung der Multipolgeometrie des magnetischen Gebers, welche eine deutliche Reduzierung der Empfindlichkeit des magnetischen Sensorelements gegenüber Positionstoleranzen zwischen Geber und sensitiven Elementen der Hall-ASICs bewirken kann. Damit lässt sich eine erhöhte Fertigungssicherheit erreichen, und es lassen sich die Genauigkeitsanforderungen an den gesamten Montageprozess des magnetischen Sensorelements stark verringern.

Die Erfindung basiert auf der Erkenntnis, dass die Genauigkeit, mit welcher ein Nord-Süd-Übergang des Gebers detektiert werden kann, stark von den dem Nord-Süd-Übergang unmittelbar benachbart angeordneten magnetischen Polen beeinflusst werden kann. Dementsprechend wird erfindungsgemäß vorgeschlagen, besonders kritische Nord-Süd-Übergänge in magnetischen Multipolgeometrien des Gebers derart zu gestalten, dass die magnetische Umgebung dieser Nord-Süd-Übergänge eine optimierte Detektion erlaubt.

Es wird dementsprechend ein magnetisches Sensorelement vorgeschlagen. Das magnetische Sensorelement kann beispielsweise, wie oben dargestellt, als Positions- und/oder Wegsensor ausgestaltet sein, beispielsweise als linearer Positions- und/oder Wegsensor. Für weitere mögliche Ausgestaltungen kann auf den oben zitierten Stand der Technik verwiesen werden, welcher erfindungsgemäß modifiziert werden kann.

Das magnetische Sensorelement umfasst mindestens eine sich entlang eines Verschiebungswegs erstreckende Magnetbahn. Unter einem Verschiebungsweg ist dabei eine Wegstrecke zu verstehen, entlang derer sich mindestens zwei beweglich gegeneinander gelagerte Elemente des magnetischen Sensorselements relativ zueinander bewegen können. Beispielsweise kann es sich bei diesen beiden beweglich gegeneinander gelagerten Elementen um einen Mitnehmer, beispielsweise einen Wählhebel, einen Wählschieber oder einen Parksperrenzylinder, und ein Gehäuse handeln, welche relativ zueinander beweglich sind, wobei die relative Positionierung dieser Elemente zueinander beispielsweise eine Schaltstellung definiert, insbesondere eine Schaltstellung eines Automatikgetriebes. Der Verschiebungsweg kann insbesondere linear ausgestaltet sein, wobei jedoch grundsätzlich auch gekrümmte Verschiebungswege realisierbar sind.

Die Magnetbahn, welche sich entlang des gesamten Verschiebungswegs und/oder lediglich entlang von Teilen dieses Verschiebungswegs erstrecken kann, und welche auch mehrere zusammenhängende oder nicht-zusammenhängende Teilbahnen umfassen kann, umfasst eine Mehrzahl von magnetischen Nord-Süd-Übergängen. Wie oben dargestellt, ist die Bezeichnung des Nord-Süd-Übergangs dabei nicht auf einen Übergang von einem magnetischen Nordpol zu einem magnetischen Südpol eingeschränkt, sondern umfasst auch Übergänge in der umgekehrten Richtung, so dass sich beispielsweise in einer Verschiebungsrichtung an einen magnetischen Nordpol ein magnetischer Südpol anschließen kann oder umgekehrt. Die Magnetbahn stellt also im Sinne der obigen Beschreibung des Standes der Technik einen magnetischen Geber oder einen Teil eines magnetischen Gebers dar.

Weiterhin umfasst das Sensorelement mindestens einen relativ zu der Magnetbahn beweglich gelagerten Magnetsensor. Der Magnetsensor kann beispielsweise mit dem Mitnehmer befestigt sein, und die Magnetbahn mit einem Gehäuse des magnetischen Sensorelements, oder umgekehrt. Die bewegliche Lagerung kann beispielsweise mittels eines Schlittens oder einer anderen dem Fachmann bekannten; beweglichen Lagerung erfolgen. Unter einem Magnetsensor ist dabei grundsätzlich ein beliebiger Sensor zu verstehen, welcher in der Lage ist, ein magnetisches Feld hinsichtlich seines Betrages und/oder seiner Richtung zu detektieren. Insbesondere kann es sich bei dem Magnetsensor um einen Hall-Sensor handeln, wobei jedoch grundsätzlich auch andere aus dem Stand der Technik bekannte Magnetsensor-Messprinzipien zum Einsatz kommen. Der Magnetsensor kann beispielsweise ein oder mehrere Sensorelemente umfassen. Sind beispielsweise mehrere Magnetbahnen vorgesehen, so kann für jede dieser Magnetbahnen mindestens ein separates Sensorelement vorgesehen sein. Weiterhin kann, wie oben beschrieben, der Magnetsensor auch eine Ansteuer- und/oder Auswerteelektronik umfassen, beispielsweise in einem integrierten Schaltkreis. Dementsprechend kann der Magnetsensor ganz oder teilweise als ASIC ausgestaltet sein, beispielsweise als ASIC, welcher auch ein oder mehrere oder alle der genannten Sensorelemente umfasst.

Bei dem vorgeschlagenen magnetischen Sensorelement wird mindestens einer der Nord-Süd-Übergänge als ein kritischer Nord-Süd-Übergang definiert, dessen Position mit einer erhöhten Genauigkeit detektiert werden soll. In diesem Sinne bedeutet "kritisch" also eine erhöhte Anforderung hinsichtlich der Detektion der Position eines Nord-Süd-Übergangs. Beispielsweise kann es sich bei diesem kritischen Nord-Süd-Übergang um einen Übergang handeln, dessen Detektion beispielsweise ein Umschalten von einem Parkzustand in einen Fahrzustand eines Kraftfahrzeugs bewirkt. Auch andere Fälle sind jedoch denkbar, in welchen ein Nord-Süd-Übergang als kritischer Nord-Süd-Übergang definiert werden kann. Insbesondere kann es sich bei dieser Definition um eine von einem Kunden und/oder Anwender vorgegebene Definition eines besonders kritischen Nord-Süd-Übergangs handeln. Die Magnetbahn kann beispielsweise mindestens drei Nord-Süd-Übergange umfassen, wobei mindestens zwei der Nord-Süd-Übergange als kritische Nord-Süd-Übergänge definiert werden.

Erfindungsgemäß wird vorgeschlagen, zur Erhöhung der Genauigkeit der Detektion des kritischen Nord-Süd-Übergangs die magnetische Umgebung dieses kritischen Nord-Süd-Übergangs zu optimieren. Dementsprechend werden bei dem vorgeschlagenen magnetischen Sensorelement benachbart zu dem kritischen Nord-Süd-Übergang magnetische Pole identischer Polarität angeordnet. Dies bedeutet, dass in einer Dimension senkrecht zur Längserstreckung der Magnetbahn, also senkrecht zum Verschiebungsweg, neben dem kritischen Nord-Süd-Übergang magnetische Pole angeordnet sind, welche identische Polarität aufweisen, also beispielsweise auf beiden Seiten Nordpole oder auf beiden Seiten Südpole. Diese Pole identischer Polarität können beispielsweise Bestandteil separater Magnetelemente sein, welche vorzugsweise unmittelbar neben dem kritischen Nord-Süd-Übergang angeordnet werden. Beispielsweise können die Pole identischer Polarität in einem Abstand von weniger als der Hälfte der Breite der Magnetbahn, also der Erstreckung der Magnetbahn senkrecht zum Verschiebungsweg, angeordnet sein, vorzugsweise unmittelbar angrenzend an die Magnetbahn.

Die magnetischen Pole identischer Polarität können beispielsweise wie oben dargestellt, Bestandteil von einzelnen Magnetelementen sein, welche benachbart zu dem kritischen Nord-Süd-Übergang angeordnet werden. Alternativ können die magnetischen Pole jedoch Bestandteil von sich parallel zu der Magnetbahn erstreckenden weiteren Magnetbahnen mit jeweils mindestens einem magnetischen Pol sein. Beispielsweise kann es sich bei der weiteren Magnetbahn um eine Magnetbahn mit mindestens einem Nord-Süd-Übergang handeln. Insofern lässt sich die Erfindung beispielsweise auch in den komplexen, mehrbahnigen Multipolanordnungen gemäß dem eingangs beschriebenen Stand der Technik einsetzen, in welchen mehrere Magnetbahnen, beispielsweise drei, vier oder mehr Magnetbahnen, vorgesehen sind, entsprechend der Speichertiefe des vorgegebenen Bitmusters. Beispielsweise können Multipolanordnungen realisiert werden, welche beispielsweise 3, 4, 5 oder mehr Magnetbahnen umfassen können.

Die weiteren Magnetbahnen können dabei beispielsweise ausschließlich dem Zweck der magnetischen Optimierung der Umgebung des kritischen Nord-Süd-Übergangs dienen. Derartige weitere Magnetbahnen werden im Folgenden auch als Dummy-Magnetbahnen bezeichnet. Deren magnetische Pole, beispielsweise deren magnetischer Nord-Süd-Übergang bzw. Nord-Süd-Übergänge, werden dabei nicht von dem Magnetsensor erfasst. Dementsprechend kann mindestens eine der weiteren Magnetbahnen als derartige Magnetbahn ausgestaltet sein, deren mindestens ein magnetischer Pol nicht von dem Magnetsensor erfasst wird. Beispielsweise können Dummy-Magnetbahnen mindestens einen Nord-Süd-Übergang aufweisen, welcher von dem Magnetsensor zumindest nicht gezielt und zweckgerichtet erfasst wird, im Sinne einer Erkennung dieses Nord-Süd-Übergangs. Gemäß diesem Aspekt der Erfindung wird ein magnetisches Sensorelement zur Erfassung mindestens einer relativen Position zwischen zwei beweglich gegeneinander gelagerten Elementen vorgeschlagen, zur Verwendung in einem Automatikgetriebe. Das magnetische Sensorelement weist mindestens eine sich entlang eines Verschiebungswegs erstreckende Magnetbahn mit einer Mehrzahl von magnetischen Nord-Süd-Übergängen sowie mindestens einen relativ zu der Magnetbahn beweglich gelagerten Magnetsensor auf. Mindestens einer der magnetischen Nord-Süd-Übergänge ist als kritischer Nord-Süd-Übergang definiert, dessen Position mit einer vorgegebenen Genauigkeit detektiert werden soll. Benachbart zu dem kritischen Nord-Süd-Übergang sind magnetische Pole identischer Polarität angeordnet, welche Bestandteil von sich parallel zu der Magnetbahn erstreckenden weiteren Magnetbahnen mit jeweils mindestens einem Nord-Süd-Übergang sind. Dabei wird vorgeschlagen,. dass eine oder beide der weiteren Magnetbahnen ebenfalls der Detektion und/oder der Codierung des Bitmusters dienen. Dementsprechend kann das Verfahren derart ausgestaltet werden, dass die Nord-Süd-Übergänge mindestens einer, vorzugsweise beider der weiteren Magnetbahnen ebenfalls von dem Magnetsensor erfasst werden, beispielsweise mittels separater Sensorelemente des Magnetsensors.

Durch die Nord-Süd-Übergänge der Magnetbahn und der weiteren Magnetbahnen kann, wie oben beschrieben, beispielsweise ein definiertes Bitmuster entlang des Verschiebungswegs vorgegeben werden. Der Magnetsensor kann separate Sensoren für die Magnetbahn und mindestens eine der weiteren Magnetbahnen, vorzugsweise für alle weiteren Magnetbahnen, aufweisen. Auf diese Weise kann durch Abfahren des Verschiebungswegs mittels der separaten Sensoren das genannte Bitmuster detektiert werden.

Da in dieser Ausgestaltung mindestens eine der weiteren Magnetbahnen gleichzeitig als Informationsträger und als Optimierung der magnetischen Umgebung des kritischen Nord-Süd-Übergangs verwendet wird, kann sich unter Umständen ein Zielkonflikt bei der Ausgestaltung der Nord-Süd-Übergänge dieser weiteren Magnetbahn ergeben. Um daher eine größere Freiheit hinsichtlich der Ausgestaltung dieser weiteren Magnetbahn zu schaffen, um den genannten Bedingungen der Ausgestaltung dieser weiteren Magnetbahn gerecht zu werden, wird vorgeschlagen, die Möglichkeit einer Invertierung der Nord-Süd-Übergänge dieser mindestens einen weiteren Magnetbahn zu nutzen. Auf diese Weise kann einerseits der beschriebene Bit-Inhalt dieser weiteren Magnetbahn gewährleistet werden, und es kann andererseits gewährleistet werden, dass der dem kritischen Nord-Süd-Übergang benachbarte magnetische Pol dieser weiteren Magnetbahn die gewünschte Polarität aufweist. Zu diesem Zweck wird vorgeschlagen, dass der Magnetsensor, welcher die Nord-Süd-Übergänge der Magnetbahn und der weiteren Magnetbahnen detektiert, separate Sensoren für die Magnetbahn und mindestens eine der weiteren Magnetbahnen aufweist. Das Signal mindestens eines Sensors kann dabei invertiert werden. Dabei kann das Signal eines Sensors für mindestens eine weitere Magnetbahn und/oder das Signal eines Sensors für die eigentliche Magnetbahn invertiert werden. Diese Invertierung kann beispielsweise durch eine logische Invertierung und/oder durch andere Arten elektronischer Inverter oder Software-implementierter Inverter erfolgen.

Beispielsweise kann die Invertierung in einem ASIC erfolgen, beispielsweise dem Hall-ASIC des Magnetsensors. Auf diese Weise lassen sich durch entsprechende Invertierungen die oben genannten Zielkonflikte, bei denen sowohl die magnetische Umgebung des kritischen Nord-Süd-Übergangs optimiert als auch ein bestimmter Informationsinhalt in der weiteren Magnetbahn enthalten sein muss, lösen.

Die vorgegebene Genauigkeit, mit der die Position des kritischen Nord-Süd-Übergangs detektiert werden muss, kann auf verschiedene Weisen vorgegeben sein. Beispielsweise kann diese Genauigkeit durch eine absolute Lage eines Nulldurchgangs eines Magnetsignals definiert sein, welches den Übergang charakterisiert. Alternativ oder zusätzlich kann die Genauigkeit auch beispielsweise durch eine Steigung des Magnetsignals definiert werden. Beispielsweise kann diese Steigung durch eine Änderung eines Magnetsignals um mindestens einen vorgegebenen Betrag innerhalb einer vorgegebenen maximalen Strecke entlang des Verschiebungswegs definiert sein. Die Änderung des Magnetsignals kann beispielsweise durch ein konkretes Sensorelement, beispielsweise einen Sensor-IC (beispielsweise einen anwendungsspezifischen integrierten Schaltkreis, ASIC) vorgegeben sein. Die Strecke entlang des Verschiebungswegs kann beispielsweise durch Anforderungen an die Schärfe des Schaltpunkts des Gesamt Sensors vorgegeben sein und beispielsweise durch eine Toleranzkette bestimmt werden.

Wie oben dargestellt, kann der kritische Nord-Süd-Übergang beispielsweise durch Kundenanforderungen vorgegeben sein. Besonders bevorzugt ist es, wenn der kritische Nord-Süd-Übergang einem Schaltübergang in einem Automatikgetriebe zugeordnet ist, welcher von einer Parkstellung zu einer Nicht-Parkstellung führt. So kann der kritische Nord-Süd-Übergang beispielsweise einem oder mehren der folgenden Schaltübergänge in einem Automatikgetriebe zugeordnet sein: einem Übergang von einer Parkstellung P zu einer Zwischenstellung Z1; einem Übergang von einer Neutralstellung N zu einer Zwischenstellung Z2 oder einer Zwischenstellung Z3; einem Übergang von einer Rückwärtsgang-Stellung R zu einer Zwischenstellung Z1 oder einer Zwischenstellung Z2. Diese Übergänge, welche in der Praxis mit besonderer Genauigkeit detektiert werden müssen, insbesondere um Unfälle zu vermeiden, lassen sich auf diese Weise besonders sicher detektieren, so dass das Automatikgetriebe besonders sicher ausgestellt werden kann.

Insgesamt lassen sich mittels des vorgeschlagenen magnetischen Sensorelements bekannte Sensorelemente erheblich wirtschaftlicher gestalten. Gleichzeitig lassen sich die Ausschussraten bei vergleichsweise geringem Aufwand zur Ausschussreduzierung stark vermindern. Auch zukünftige, schärfere Anforderungen des Marktes hinsichtlich der Messgenauigkeit der magnetischen Sensorelemente lassen sich durch die erfindungsgemäßen Ausgestaltungen leicht realisieren.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figuren 1A und 1B: eine dem Stand der Technik entsprechende und eine erfindungsgemäße Ausgestaltung der magnetischen Umgebung des Nord-Süd-Übergangs;
- Figuren 2A und 2B: Messkurven der magnetischen Feldstärke entlang des Verschiebungswegs für einen konventionellen und einen dem Stand der Technik entsprechenden Nord-Süd-Übergang; und
- Figuren 3A und 3B: eine dem Stand der Technik entsprechende und eine erfindungsgemäße Ausgestaltung eines magnetischen Multipols.

### Ausführungsbeispiele

Die Erfindung wird im Folgenden exemplarisch beschrieben unter Bezugnahme auf einen Positionssensor, wie er beispielsweise in der oben beschriebenen Veröffentlichung Robert Bosch GmbH: "Sensoren im Kraftfahrzeug", Ausgabe 2007, Seiten 136 bis 137 beschrieben ist. Für die möglichen Ausgestaltungen des magnetischen Sensorelements kann dementsprechend auf diese Veröffentlichung verwiesen werden. Die vorliegende Erfindung betrifft lediglich die Ausgestaltung der Multipolanordnung des magnetischen Gebers des Positionssensors.

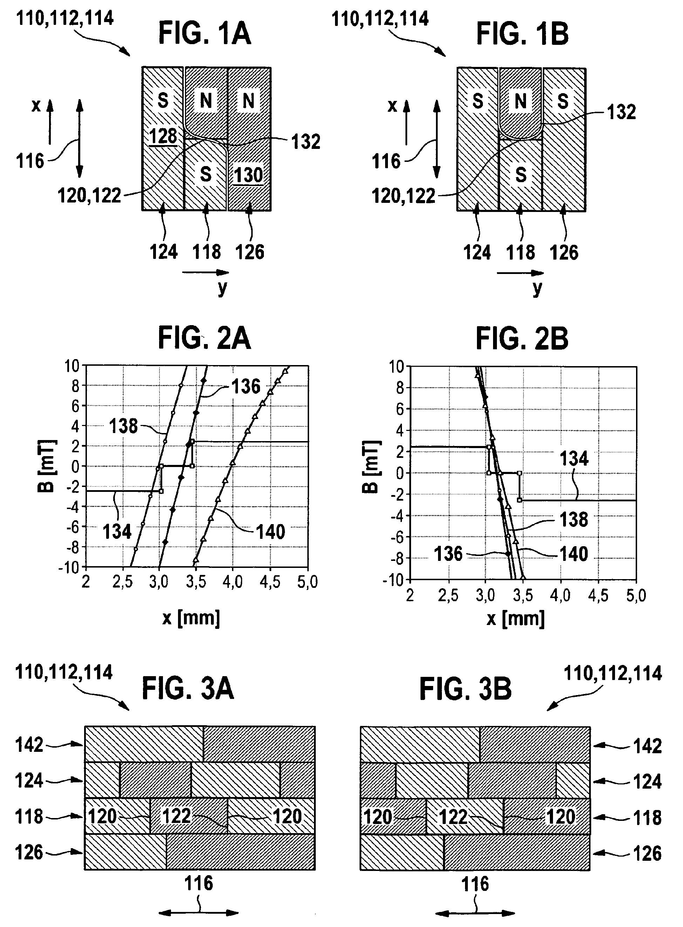

In den Figuren 1A und 1B sind Ausschnitte einer Multipolanordnung 110 eines magnetischen Gebers 112 eines magnetischen Sensorelements 114 dargestellt. Dabei zeigt Figur 1A einen Teil einer dem Stand der Technik entsprechenden Multipolanordnung 110, wohingegen Figur 1B eine erfindungsgemäße Ausgestaltung dieser Multipolanordnung 110 zeigt. Die Multipolanordnung 110 weist in dem dargestellten Ausführungsbeispiel eine sich entlang eines Verschiebungswegs 116 erstreckende Magnetbahn 118 auf. Allgemein sind in den Figuren dabei magnetische Nordpole mit N bezeichnet, während magnetische Südpole mit S bezeichnet sind. Die Magnetbahn 118 weist eine Mehrzahl von Nord-Süd-Übergängen 120 auf, von denen lediglich einer in den Figuren 1A und 1B dargestellt ist. Es sei angenommen, dass dieser dargestellte Nord-Süd-Übergang ein kritischer Nord-Süd-Übergang 122 ist, dessen Position entlang des Verschiebungswegs 116 von einem in den Figuren nicht dargestellten Magnetsensor mit einer vorgegebenen Genauigkeit detektiert werden soll, beispielsweise mit einer höheren Genauigkeit, als mindestens ein weiterer Nord-Süd-Übergang 120 der Magnetbahn 118.

In Figur 1A ist eine Multipolanordnung 110 gemäß dem Stand der Technik dargestellt, bei der die Umgebung des kritischen Nord-Süd-Übergangs 122 zufällig ausgestaltet wird, indem dieser mit weiteren Magnetbahnen 124, 126 umgeben wird, die benachbart zu dem kritischen Nord-Süd-Übergang 122 magnetische Pole 128, 130 entgegengesetzter Polarität aufweisen. So weist die linke der weiteren Magnetbahnen 124 an dem kritischen Nord-Süd-Übergang 122 einen magnetischen Südpol auf, wohingegen die rechte der weiteren Magnetbahnen 126 an einem kritischen Nord-Süd-Übergang einen magnetischen Nordpol aufweist.

In den Figuren 1A und 1B ist die Dimension parallel zum Verschiebungsweg 116 mit x bezeichnet, wohingegen die Dimension senkrecht zu diesem Verschiebungsweg 116 mit y bezeichnet ist. In den Figuren 1A und 1B ist weiterhin eine Kurve 132 dargestellt, welche den Verlauf der magnetischen Feldstärke als Funktion der Koordinate y, also als Funktion der Position senkrecht zum Verschiebungsweg 116, charakterisiert. Aus dieser Kurve geht hervor, dass bei der Anordnung in Figur 1A mit der asymmetrischen Ausgestaltung der magnetischen Pole 128, 130 der Polübergang ebenfalls asymmetrisch verläuft und die Breite des Magnetpols sehr stark verzerrt. Der Absolutbetrag der Abweichung von einem Sollwert bei einer Abweichung von einer Mittenposition innerhalb der Magnetbahn 118 schwankt also vergleichsweise stark. Ein lateraler Versatz kann also durch die starke Asymmetrie des Polübergangs, dargestellt durch die Kurve 132, zu einem erheblichen Versatz des resultierenden Schaltpunkts führen.

In Figur 1B ist hingegen eine Multipolanordnung 110 dargestellt, bei welcher der kritische Nord-Süd-Übergang 122 beidseitig von magnetischen Polen 128, 130 identischer Polarität umgeben ist. In diesem Fall sind die beiden magnetischen Pole 128, 130 als Südpole ausgestaltet, wobei jedoch auch eine Ausgestaltung als Nordpole möglich ist. Wiederum ist in Figur 1B auch der Verlauf des Polübergangs 132 als Funktion der y-Koordinate symbolisch durch die Kurve 132 gezeigt. Es ist zu erkennen, dass der Verlauf 132 des Polübergangs bei der erfindungsgemäßen Ausgestaltung mit drei gleichartigen Magnetpolen, die U-förmig um einen Gegenpol angeordnet sind, wobei dieser funktionsrelevante Übergang den Bogen eines Buchstabens "U" bildet, den Polübergang über die Breite des Magnetpols hinweg deutlich geringer verzerrt. Aufgrund der Symmetrie des Polübergangs wird der mögliche Versatzbereich des Schaltpunkts zusätzlich deutlich reduziert. Durch die symmetrische Anordnung der magnetischen Pole 128, 132 um den kritischen Nord-Süd-Übergang 122 herum, kann somit eine Minimierung der geometrischen Verzerrung des Polübergangs erreicht und die Unempfindlichkeit des Messsystems gegenüber der Positionstoleranzen zwischen Geber und Magnetsensor je nach Bauraum um bis zu einen Faktor 5 erhöht werden.

In den Figuren 2A und 2B sind Magnetfeld-Messungen an realen Nord-Süd-Übergängen 120 für eine dem Stand der Technik entsprechende Multipolanordnung 110 und eine Multipolanordnung 110 gemäß der Erfindung gezeigt. Die Messungen wurden dabei an einer Magnetbahn 118 mit einer Breite von 3,3 mm vorgenommen. Dargestellt ist jeweils die Magnetfeldstärke B als Funktion der Koordinate x in mm entlang des Verschiebungswegs 116.

Zunächst ist in beiden Figuren ein Sollverlauf 134 exemplarisch dargestellt. Dieser Sollverlauf zeigt, dass zwischen Beginn und Ende des Schaltpunkts die Magnetfeldstärke beide magnetische Schaltschwellen des Magnetsensors durchlaufen muss, um einen Schaltvorgang auszulösen. Beginn und Ende des Schaltpunkts (Ortskoordinate x) und die Schaltschwellen des Magnetsensor (Magnetfeld B) bilden damit den Sollverlauf. Weiterhin ist in den Figuren jeweils eine Kurve 136 gezeigt, welche den Magnetfeldverlauf für eine angenommene Spurmitte in der Magnetbahn 118 zeigt. Weiterhin sind Kurven 138, 140 dargestellt, welche den Magnetfeldverlauf für einen Versatz in y-Richtung von -1,25 mm (Kurve 138) bzw. für einen Versatz um +1,25 mm (Kurve 140) zeigen.

Der Vergleich der erfindungsgemäßen Ausgestaltung des kritischen Nord-Süd-Übergangs 122 gemäß dem Stand der Technik in Figur 2A mit der erfindungsgemäßen Ausgestaltung in Figur 2B zeigt, dass bei wirtschaftlich herstellbaren Positionstoleranzen des Dauermagnets der Multipolanordnung 110 relativ zum Magnetfeldsensor der Sollverlauf der magnetischen Flussdichte gemäß den Spezifikationen nicht oder nur schwer einzuhalten ist. So liegen die Kurven 138 und 140 der magnetischen Flussdichte B bei der dem Stand der Technik entsprechenden Ausgestaltung in Figur 2A außerhalb des Sollverlaufs. Bei der in Figur 2B gezeigten, erfindungsgemäß optimierten Auslegung hingegen ist bei wirtschaftlich herstellbaren Positionstoleranzen der Sollverlauf der magnetischen Flussdichte B gemäß den Spezifikationen einhaltbar. Sämtliche Kurven 136, 138 und 140 liegen innerhalb des Sollverlaufs 134.

Die weiteren Magnetbahnen 124, 126, welche im Bereich des kritischen Nord-Süd-Übergangs 122 die magnetischen Pole 128, 130 bereitstellen, können, einzeln oder beide, ihrerseits als Informationsträger genutzt werden. Letzterer Fall ist in den Figuren 3A und 3B dargestellt, wobei Figur 3A wiederum eine konventionelle Auslegung zeigt und Figur 3B eine optimierte Auslegung. Dargestellt ist ein Ausschnitt aus einer Multipolanordnung 110, bei welcher willkürlich die zweite Bahn von unten als Magnetbahn 118 bezeichnet wurde, und die übrigen Magnetbahnen als weitere Magnetbahnen 124, 126 und 142. Letztendlich können jedoch sämtliche Magnetbahnen 118, 124, 126 und 142 mit ihren Nord-Süd-Übergängen 120 als Informationsträger dienen, beispielsweise um ein Bitmuster entlang des Verschiebungswegs 116, der in den Figuren 3A und 3B horizontal dargestellt ist, zu bilden. Bei dem dargestellten Bitmuster kann beispielsweise einer der Nord-Süd-Übergänge 120 der Magnetbahn 118 als kritischer Nord-Süd-Übergang 122 definiert werden, da beispielsweise der mit diesem Nord-Süd-Übergang 122 verbundene Schaltvorgang sicherheitsrelevant ist. Beispielsweise kann es sich bei dem detektierten Schaltvorgang um einen Übergang von einer Parkstellung P zu einer Zwischenstellung Z1 handeln und/oder um einen Übergang von einer Neutralstellung N zu einer Zwischenstellung Z2 oder einer Zwischenstellung Z3 und/oder um einen Übergang von einer Rückwärtsgang-Stellung R zu einer Zwischenstellung Z1 oder einer Zwischenstellung Z2.

Wie aus dem Bitmuster der Multipolanordnung 110 in Figur 3A gemäß dem Stand der Technik hervorgeht, sind bei der herkömmlichen Anordnung der Multipolgeometrie alle Polübergänge bis auf einen asymmetrisch ausgebildet. Der kritische Nord-Süd-Übergang 122, welcher den engsten Toleranzbereich aufweist, ist hier jedoch gleichzeitig der Übergang mit der größten Asymmetrie.

In Figur 3B ist eine erfindungsgemäße Modifikation des Bitmusters gemäß Figur 3A gezeigt. Dabei sind die Magnetbahnen 118 und 124 gegenüber der Anordnung in Figur 3A invertiert ausgestaltet. Um dennoch das gleiche Bitmuster wie in Figur 3A darzustellen, können die Signale der zugehörigen Sensorelemente, welche die Magnetbahnen 118 und 124 detektieren, beispielsweise invertiert werden. Durch die Invertierung der Magnetpole auf den beiden Innenbahnen 118, 124 sind alle Nord-Süd-Übergänge 120 dieser Bahnen bis auf einen symmetrisch ausgebildet. Insbesondere der als kritischer Nord-Süd-Übergang 122 definierte Polübergang hat in dieser Ausgestaltung nun den schärfsten Nord-Süd-Übergang.

Die Ausgestaltung der weiteren Magnetbahnen 124, welche die Magnetfeldumgebung des kritischen Nord-Süd-Übergangs 122 optimieren sollen, in Form von weiteren Magnetbahnen 124, 126, 142, welche ebenfalls als Informationsträger dienen, stellt eine besonders bauraumeffiziente Umsetzung der oben beschriebenen Erfindung dar. Die weiteren Magnetbahnen 124, 126, 142 sind ihrerseits Informationsträger, welche in einer Doppelfunktion die geeignete Magnetfeldumgebung für den kritischen Nord-Süd-Übergang 122 bereitstellen.

## Patentansprüche

1. Magnetisches Sensorelement (114) zur Erfassung mindestens einer relativen Position zwischen zwei beweglich gegeneinander gelagerten Elementen zur Verwendung in einem Automatikgetriebe, wobei das magnetische Sensorelement (114) mindestens eine sich entlang eines Verschiebungswegs (116) erstreckende Magnetbahn (118) mit einer Mehrzahl von magnetischen Nord-Süd-Übergängen (120) sowie mindestens einen relativ zu der Magnetbahn beweglichen Magnetsensor umfasst, wobei mindestens einer der magnetischen Nord-Süd-Übergänge der Magnetbahn (118) detektiert wird, **dadurch gekennzeichnet, dass** der mindestens eine detektiert Nord-Süd-Übergang dadurch als kritischer Nord-Süd-Übergang (122) definiert wird, dass seine Position entlang des Verschiebungswegs (116) mit einer vorgegebenen erhöhten Genauigkeit detektiert werden soll, die höher ist, als die Genauigkeit mit der mindestens ein weiterer Nord-Süd-Übergang (120) der gleichen Magnetbahn (118) detektiert wird, wobei in einer Richtung senkrecht zum Verschiebungsweg (116) auf beiden Seiten des kritischen Nord-Süd-Übergangs (122) und unmittelbar benachbart zu dem kritischen Nord-Süd-Übergang (122) magnetische Pole (128, 130) identischer Polarität angeordnet sind, die Bestandteile von sich parallel zu der Magnetbahn (116) erstreckenden und mindestens einen Nord-Süd-Übergang aufweisenden weiteren Magnetbahnen (124, 126) sind, und mindestens eine der weiteren Magnetbahnen (124, 126) über einen weiteren Sensor ausgelesen wird, und dass die Magnetbahnen ein vorgegebenes Bitmuster codieren.

2. Magnetisches Sensorelement (114) nach dem vorhergehenden Anspruch, wobei die Magnetbahn (118) mindestens drei Nord-Süd-Übergänge (120) umfasst, wobei mindestens zwei der Nord-Süd-Übergänge als kritische Nord-Süd-Übergänge definiert werden.

3. Magnetisches Sensorelement (114) nach einem der vorhergehenden Ansprüche, wobei das Signal mindestens eines Magnetsensors für mindestens eine der weiteren Magnetbahn (124, 126) invertiert wird.

4. Sensorelement (114) nach einem der vorhergehenden Ansprüche, wobei der kritische Nord-Süd-Übergang (122) einem oder mehreren der folgenden Schaltübergänge in einem Automatikgetriebe zugeordnet ist: einem Übergang von einer Parkstellung P zu einer Zwischenstellung Z1; einem Übergang von einer Neutralstellung N zu einer Zwischenstellung Z2 oder einer Zwischenstellung Z3; einem Übergang von einer Rückwärtsgang-Stellung R zu einer Zwischenstellung Z1 oder einer Zwischenstellung Z2.

## Claims

1. Magnetic sensor element (114) for sensing at least one relative position between two elements mounted movably with respect to one another for use in an automatic transmission, wherein the magnetic sensor element (114) comprises at least one magnetic track (118), which extends along a displacement path (116) and has a plurality of magnetic north/south transitions (120), and at least one magnetic sensor which is movable relative to the magnetic track, wherein at least one of the magnetic north/south transitions of the magnetic track (118) is detected, **characterized in that** the at least one detected north/south transition is defined as a critical north/south transition (122) by virtue of its position along the displacement path (116) being intended to be detected at a predefined increased accuracy which is greater than the accuracy with which at least one further north/south transition (120) of the same magnetic track (118) is detected, wherein magnetic poles (128, 130) of identical polarity are arranged in a direction perpendicular to the displacement path (116) on both sides of the critical north/south transition (122) and directly adjacent to the critical north/south transition (122) and are parts of further magnetic tracks (124, 126) extending parallel to the magnetic track (116) and having at least one north/south transition, and at least one of the further magnetic tracks (124, 126) is read via a further sensor, and **in that** the magnetic tracks code a predefined bit pattern.

2. Magnetic sensor element (114) according to the preceding claim, wherein the magnetic track (118) comprises at least three north/south transitions (120), wherein at least two of the north/south transitions are defined as critical north/south transitions.

3. Magnetic sensor element (114) according to one of the preceding claims, wherein the signal from at least one magnetic sensor is inverted for at least one of the further magnetic tracks (124, 126).

4. Sensor element (114) according to one of the preceding claims, wherein the critical north/south transition (122) is assigned to one or more of the following shifting transitions in an automatic transmission: a transition from a parking position P to an intermediate position Z1; a transition from a neutral position N to an intermediate position Z2 or an intermediate position Z3; a transition from a reverse gear position R to an intermediate position Z1 or an intermediate position Z2.

## Revendications

1. Élément de détection magnétique (114) destiné à détecter au moins une position relative entre deux éléments montés mobiles l'un par rapport à l'autre et destinés à être utilisés dans une boîte de vitesses automatique, l'élément de détection magnétique (114) comprenant au moins une piste magnétique (118) dotée d'une pluralité de transitions nord-sud (120) qui s'étend le long d'un trajet de translation (116) ainsi qu'au moins un capteur magnétique mobile par rapport à la piste magnétique, au moins l'une des transitions nord-sud de la piste magnétique (118) étant détectée, **caractérisé en ce que** l'au moins une transition nord-sud détectée est définie comme étant une transition nord-sud sensible (122) par le fait que sa position le long du trajet de translation (116) doit être détectée avec une précision accrue prédéfinie, laquelle est supérieure à la précision avec laquelle est détectée au moins une autre transition nord-sud (120) de la même piste magnétique (118), des pôles magnétiques (128, 130) de polarité identique étant disposés des deux côtés de la transition nord-sud sensible (122) dans une direction perpendiculaire au trajet de translation (116) et dans le voisinage immédiat de la transition nord-sud sensible (122), lesquels font partie de pistes magnétiques supplémentaires (124, 126) qui s'étendent parallèlement à la piste magnétique (116) et possèdent au moins une transition nord-sud, et au moins l'une des pistes magnétiques supplémentaires (124, 126) est lue par le biais d'un capteur supplémentaire, et **en ce que** les pistes magnétiques codent un modèle binaire prédéfini.

2. Élément de détection magnétique (114) selon la revendication précédente, avec lequel la piste magnétique (118) comprend au moins trois transitions nord-sud (120), au moins deux des transitions nord-sud étant définies comme des transitions nord-sud sensibles.

3. Élément de détection magnétique (114) selon l'une des revendications précédentes, avec lequel le signal d'au moins un capteur magnétique est inversé pour au moins l'une des pistes magnétiques supplémentaires (124, 126).

4. Élément de détection magnétique (114) selon l'une des revendications précédentes, avec lequel la transition nord-sud sensible (122) est associée à une ou plusieurs des transitions de signal suivantes dans une boîte de vitesses automatique : une transition d'une position de stationnement P en une position intermédiaire Z1 ; une transition d'une position neutre N en une position intermédiaire Z2 ou une position intermédiaire Z3 ; une transition d'une position de marche arrière R en une position intermédiaire Z1 ou une position intermédiaire Z2.
